# FASCICULE DE BREVET EUROPEEN

(11) **EP 0 938 245 B1**
(45) Date de publication et mention de la délivrance du brevet: **24.07.2002**
(21) Numéro de dépôt: 99400331.7
(22) Date de dépôt: 11.02.1999
(51) Int. Cl.: H04Q 11/04

(54) **Procédé de configuration d'un réseau de terminaux avec bus de connexion de ceux-ci, et terminal pour la mise en oeuvre du procédé**
Verfahren zur Konfiguration eines Endgeräte-Netzes mit einem Verbindungsbus, und Endgerät dafür
Process for configuration of a network of terminals with connecting bus for them, and terminal therefore

(30) Priorité: 11.02.1998 FR 9801611
(43) Date de publication de la demande: 25.08.1999
(73) Titulaire: SAGEM SA, 75116 Paris (FR)
(72) Inventeur: Deliveyne, Pierre, 95490 Vaureal (FR); Nicot, Erwan, 95520 Osny (FR); Omgda, Lovis, 95280 Jouy le Moutier (FR)
(74) Mandataire: Bloch, Gérard

(56) Documents cités:
- EP-A- 0 522 895
- US-A- 4 963 862
- US-A- 5 125 082
- US-A- 5 317 693

## Description

La présente invention concerne les réseaux de transmission de données dans lesquels des terminaux banalisés, sans identificateur, ou adresse, fixe, peuvent se raccorder à un bus du réseau.

On peut en particulier songer au Réseau Numérique à Intégration de Services (RNIS), dans lequel un bus à interface S0 permet de raccorder jusqu'à huit terminaux en parallèle.

Du fait de cette mise en parallèle, l'adresse du bus dans le réseau est insuffisante pour permettre aux terminaux d'établir des communications dans le réseau, puisqu'il faut pouvoir aiguiller celles-ci entre le bus et les terminaux concernés.

Ces terminaux ont donc chacun un identificateur spécifique. Celui-ci est fixe pour certains terminaux tandis que d'autres, banalisés de ce point de vue, se voient affecter par le réseau un identificateur dynamique à chaque fois qu'ils s'y connectent.

Les terminaux à identificateur fixe ne posent pas de problème d'identification, pour les incorporer à la liste des terminaux configurant le réseau, lorsqu'on les active par mise sous tension. Cependant, il faut évidemment vérifier, lors de toute mise en service de terminal, que son identificateur ne soit pas le même que celui d'un autre, puisque la pluralité des identificateurs possibles est limitée au besoin de différenciation d'un nombre très limité de terminaux sur un même bus.

L'invention concerne les autres terminaux, banalisés, qui présentent l'avantage de ne pas nécessiter de vérification de compatibilité d'identificateur lors de leur mise en service.

De façon classique, lorsque l'utilisateur, par le secteur, met sous tension le terminal, celui-ci requiert, auprès du réseau de transmission, un identificateur en émettant une demande à cet effet sur le bus et il mémorise l'identificateur dynamique reçu en retour, aussi longtemps qu'il le peut, c'est-à-dire tant qu'il reste alimenté par le secteur, comme par exemple enseigné par U.S.A. 4963862 conformément à la recommandation CCITT I 430.

Cette façon de procéder pour configurer le réseau, c'est-à-dire identifier les terminaux fonctionnels, raccordés aux divers bus, présente cependant des inconvénients.

En effet, un terminal, lors de sa mise sous tension, émet immédiatement la requête d'identificateur et attend la réponse. Or, si on a oublié de le connecter au bus, cette requête n'est donc pas transmise et est perdue si bien que, même si l'opérateur connecte finalement le terminal au bus, aucun identificateur ne parviendra au terminal.

Ainsi, et bien que le terminal soit parvenu à l'état électrique normal, alimenté et connecté, le cheminement pour y parvenir est passé par l'état anormal antérieur, de non-connexion, et perturbe l'état logique actuel, ainsi défectueux.

Un opérateur constatant le non-fonctionnement du terminal, correctement raccordé, risque alors de considérer qu'il est matériellement en panne, alors qu'il suffirait, à condition de le savoir, de couper temporairement l'alimentation pour supprimer l'effet mémoire perturbateur en réinitialisant le processus de requête.

Un autre problème peut se présenter lorsque l'opérateur déconnecte temporairement le terminal du bus. Le réseau peut alors détecter l'absence du terminal et l'exclure du réseau, c'est-à-dire ne plus reconnaître son identificateur, si bien que le terminal, resté sous tension et reconnecté, n'est plus opérationnel, bien qu'il ait conservé son identificateur. Il risque même de se produire que le réseau affecte l'identificateur dynamique du terminal, qu'il considère comme libre, à un autre terminal du même bus, ce qui, bien évidemment, va perturber les communications.

La présente invention vise à éviter au moins le premier problème de configuration du réseau.

A cet effet, l'invention concerne un procédé de configuration d'un réseau de transmission de données comportant un parc de terminaux banalisés et un bus de connexion, la connexion commandant l'émission d'une requête d'identificateur au réseau et la mémorisation de cet identificateur, procédé caractérisé par le fait qu'en le connectant au bus, chaque terminal détecte la connexion.

Ainsi, c'est le fait que les terminaux appartiennent physiquement au réseau, par connexion au bus, qui détermine la configuration du réseau, par attribution des identificateurs, dont la présence est l'image de l'état de raccordement mutuel de chaque terminal et du bus. La mise sous tension d'un terminal n'est donc pas en elle-même déclarative de l'appartenance au réseau. Bien évidemment, la mise sous tension d'un terminal déjà raccordé au bus provoquera le processus de demande d'identificateur, mais cette mise sous tension ne fournit en fait que des moyens fonctionnels, dont la commande dépend toujours de la connexion avec le bus.

L'invention sera mieux comprise à l'aide de la description suivante d'un mode de mise en oeuvre préféré du procédé de l'invention, en référence au dessin annexé, sur lequel :
- la figure 1 est un schéma d'ensemble, par blocs fonctionnels, d'une terminaison numérique d'abonné avec un terminal, connecté à un bus, pour la mise en oeuvre du procédé,
- la figure 2 est un schéma par blocs du terminal, et
- la figure 3 représente le schéma électrique d'un détecteur de tension du terminal, relié au bus.

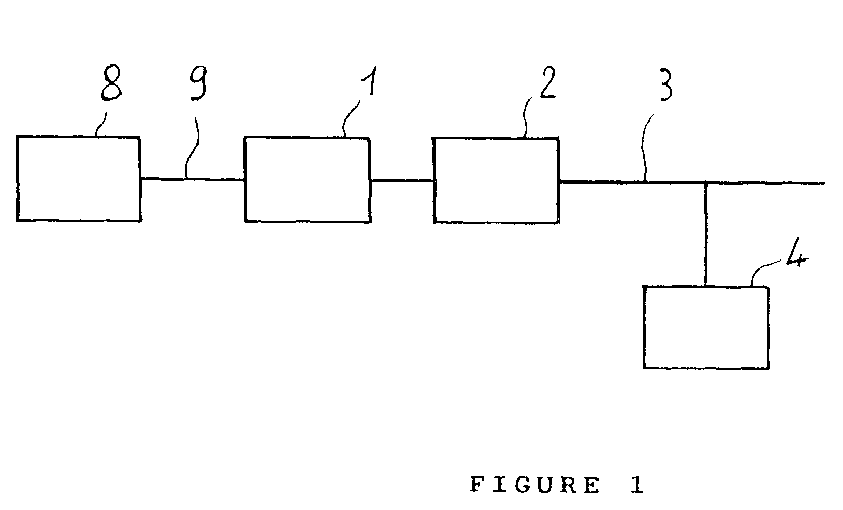

Sur la figure 1 est représenté un réseau numérique 8, ici le Réseau Numérique à Intégration de Services, RNIS, auquel est relié, par une ligne numérique 9, une terminaison numérique de réseau 1 qui sert au raccordement, par une liaison 4 fils à l'interface T, d'une terminaison numérique d'abonné 2. Celle-ci sert elle-même de raccordement pour un bus 3 à deux paires de fils selon l'interface S0, respectivement émission et réception, auquel peuvent se connecter jusqu'à huit terminaux numériques, dont seul est représenté celui référencé 4. Le terminal 4, et d'autres éventuels, semblables, du parc de terminaux, est banalisé, c'est-à-dire qu'il n'a pas d'identificateur fixe vis-à-vis du réseau.

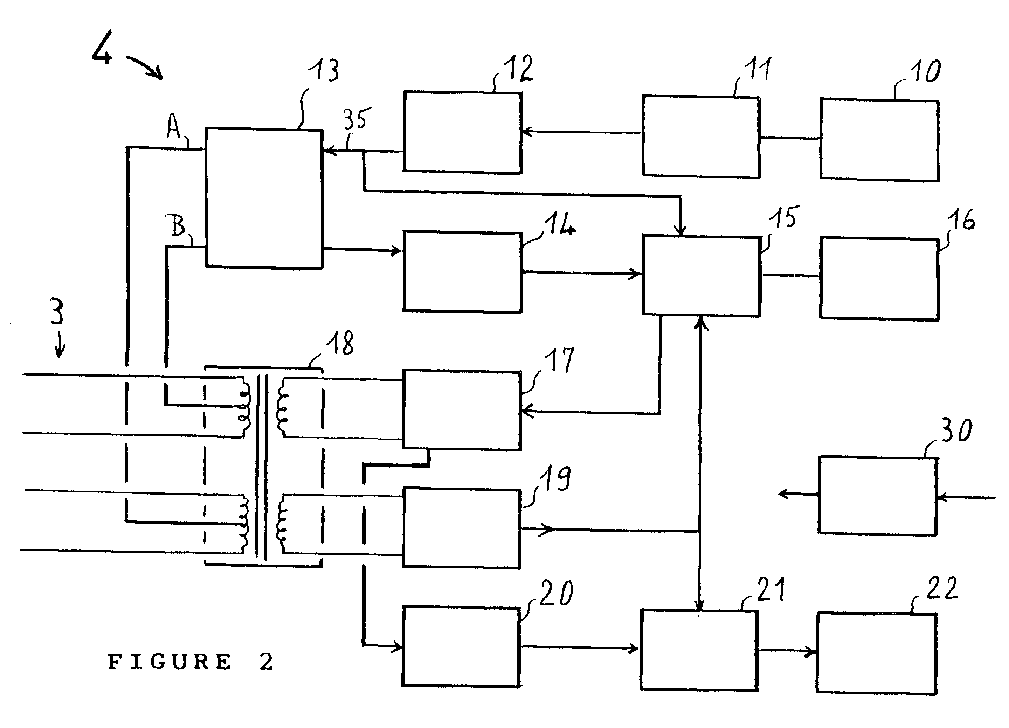

Comme le montre la figure 2, le terminal 4 comporte une base de temps 10 de séquencement d'une unité centrale à microprocesseur 11 et un détecteur de tension 13, commandé par l'unité centrale 11 à travers un circuit d'activation 12, le détecteur 13 étant raccordable à des points milieu A et B de deux enroulements primaires d'un transformateur 18 de connexion au bus 3. Les deux paires de fils sont polarisées l'une par rapport à l'autre sous 40 volts par une alimentation continue, dans la terminaison numérique d'abonné 2, destinée à permettre la téléalimentation, par le bus 3, de certains terminaux, à faible consommation. Le terminal 4 n'entre pas dans cette catégorie. La polarisation est appliquée, dans la terminaison 2, entre les points milieu des deux enroulements primaires, côté bus 3, d'un transformateur semblable au transformateur 18. La sortie de détection du circuit 13 commande un circuit 14 de mise en forme d'interruption, commandant lui-même un bloc logique d'écriture d'une mémoire 16 d'adresse réseau TEI (Identifiant de Terminal). Le bloc 15, recevant aussi la commande issue du circuit 12, commande un circuit 17 d'émission d'une requête d'adresse réseau, relié à un secondaire du transformateur 18 d'accès au bus 3, dont le second secondaire commande un circuit 19 de réception d'adresse réseau, relié à la mémoire 16 à travers le bloc 15. Une alimentation secteur 30 alimente l'ensemble.

A une sortie du circuit 17 est relié un bloc logique temporisateur 20, "chien de garde" ou watch dog, armé par l'émission de la requête d'identificateur TEI, dont la sortie commande un bloc logique 21 de détection de défaut de connexion au réseau numérique, commandant lui-même un circuit 22 de signalisation d'un tel défaut, tel qu'un afficheur. Le récepteur 19 est aussi relié en sortie au bloc 21 pour l'informer de la réception d'un identificateur TEI et ainsi l'inhiber, ce qui revient à désarmer la temporisation 20, armée après la détection de la connexion au bus 3.

Comme expliqué plus en détails plus loin, en le connectant au bus 3, le terminal 4, et chaque terminal semblable, détecte, par les circuits 13, 14, 15, la connexion qui commande, par le circuit 15, l'émission d'une requête d'adresse TEI au réseau par le circuit 17 et la mémorisation de cette adresse TEI dans la mémoire 16.

Si aucune adresse TEI n'est reçue à l'expiration de la temporisation 20, le circuit 21 signale un défaut par le circuit 22.

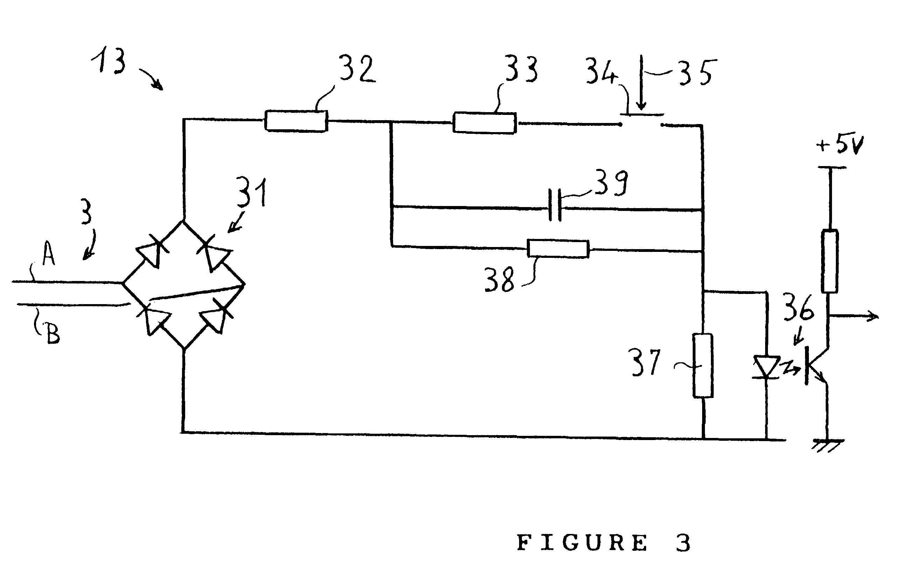

La figure 3 représente plus en détails le circuit détecteur 13. Il comporte en tête un pont redresseur à diodes 31, permettant de s'affranchir du sens de la polarité de la tension continue présente entre les points milieu A et B.

En aval du pont 31 se trouve une boucle comportant, en série, deux résistances série 32 et 33 de limitation de courant, un interrupteur 34, commandé par le circuit 12 par une liaison 35, et un détecteur de courant 36, ici un photocoupleur. Une résistance 37, en parallèle sur le détecteur 36, fixe un seuil minimal de tension de ligne détectable. Un circuit RC parallèle, 38, 39, est en outre branché en parallèle entre le point commun aux résistances 32, 33 et le point commun à l'interrupteur 34 et le détecteur 36.

Le fonctionnement du circuit détecteur 13 est le suivant.

La tension de polarisation de bus 3, redressée pour s'affranchir du sens de branchement, produit un courant dans la boucle à détecteur 36 ci-dessus. Le circuit détecteur 13, connecté au bus 3, est ici activé de façon cyclique par le circuit 12 pour échantillonner la tension du bus 3.

Au repos, interrupteur 34 ouvert, sa consommation est quasi nulle, la résistance 38 étant de valeur élevée.

En fonctionnement, un courant de quelques centaines de microampères traverse les résistances 32, 33 et l'interrupteur 34, pour se répartir entre la diode d'entrée du photocoupleur 36 et la résistance 37 qui détourne un courant déterminé, ici une fraction de milliampère.

Le transistor de sortie du photocoupleur 36 est alors conducteur et tire à la masse une résistance de polarisation au + 5 volts d'alimentation de l'appareil. En synchronisme avec la commande de la liaison 35, le circuit 14 détecte alors l'état logique bas issu du détecteur 13, et, sinon, en l'absence de connexion au bus 3, il détecte l'état logique 1. Le circuit 15, synchronisé par le circuit 12, lit alors le signal de sortie du circuit 14.

La durée de fonctionnement représentant un faible pourcentage du cycle, on peut ainsi prélever sur le bus 3 un courant de fonctionnement du détecteur 13 nettement plus élevée que le courant moyen qu'il est prévu ici de ne pas dépasser et qui correspond à 3 mWatts.

Le circuit RC 38, 39 a pour but de permettre une détection asynchrone, c'est-à-dire de s'affranchir des commandes 35 de l'interrupteur 34 lorsque le terminal est en veille et que son logiciel, faute d'énergie suffisante, ne peut commander l'interrupteur 34. En pareil cas, lorsque l'utilisateur du terminal connecte celui-ci au bus 3, le condensateur 39, déchargé au repos par la résistance 38, équivaut à un court-circuit provisoire, en parallèle sur l'interrupteur 34. Le détecteur 36, protégé contre un excès de courant par la résistance 32, fournit ainsi au circuit 14 une impulsion à l'état bas de durée fonction de la constante de temps du RC 38, 39. On détecte ainsi la mise sous tension du détecteur 13, même en l'absence de commande (35). Le circuit 14 relaie alors cette impulsion sous la forme d'une interruption du logiciel de veille dans le circuit 15, afin de réveiller le terminal. La commande cyclique de l'interrupteur 34 est alors activée et surveille le maintien de la connexion au bus 3. En cas d'apparition, lors d'une lecture, d'un niveau haut en sortie du photocoupleur 36, indiquant la déconnexion d'avec le bus 3, le circuit 15 lance une temporisation pour confirmer cette déconnexion sur plusieurs cycles et passer en veille. Il efface alors l'identificateur dynamique TEI de la mémoire 16.

Une reconnexion au bus 3 provoquera à nouveau le processus décrit ci-dessus. La présence de l'identificateur TEI en mémoire 16 est ainsi l'image de la connexion au bus 3.

On notera que le circuit détecteur 13 pourrait avoir d'autres formes de réalisation et par exemple se présenter sous la forme d'un détecteur mécanique ou magnétique d'un connecteur, détectant l'état de connexion du terminal au bus 3 par la présence d'une partie complémentaire du connecteur, solidaire du bus 3.

## Revendications

1. Procédé de configuration d'un réseau de transmission de données (8) qui comporte un parc de terminaux banalisés (4) et un bus de connexion (3), la connexion commandant l'émission (15, 17) d'une requête d'identificateur au réseau (8) et la mémorisation (16) de cet identificateur, procédé **caractérisé par le fait qu'**en le connectant au bus (3), chaque terminal (4) détecte (13, 14) la connexion.

2. Procédé selon la revendication 1, dans lequel chaque terminal, en le déconnectant du bus (3), efface son identificateur mémorisé (16).

3. Procédé selon l'une des revendications 1 et 2, dans lequel, le bus (3) étant polarisé, on détecte l'état de connexion par détection de la polarisation du bus (3).

4. Procédé selon la revendication 3, dans lequel on détecte la polarisation du bus (3) par un échantillonnage cyclique.

5. Procédé selon la revendication 4, dans lequel, au repos, on maintient chaque terminal (4) en état de veille, on détecte de façon statique sa mise en connexion avec le bus (3) et on réveille alors le terminal (4) pour l'échantillonnage cyclique.

6. Procédé selon l'une des revendications 1 à 5, dans lequel on arme une temporisation (20) après la détection de la connexion et on engendre une alarme (22) si la temporisation (20) n'est pas interrompue par la réception d'une réponse d'allocation d'un identificateur.

7. Terminal pour la mise en oeuvre du procédé de la revendication 1, dans lequel il est prévu des moyens (13, 14) de détection de l'état de connexion du terminal à un bus (3) d'un réseau de transmission de données (8), agencés pour commander des moyens de requête (17), par le bus (3), et de mémorisation (16) d'un identificateur du réseau (8).

8. Terminal selon la revendication 7, dans lequel les moyens de surveillance (13, 14) sont agencés pour commander l'effacement de l'identificateur mémorisé (16) en cas de déconnexion du bus (3).

9. Terminal selon l'une des revendications 7 et 8, dans lequel les moyens de surveillance comportent des moyens interrupteurs (34) commandés par des moyens séquenceurs (10, 12) et agencés pour activer cycliquement des moyens (36) détecteurs d'une tension de polarisation du bus (3).

10. Terminal selon la revendication 8, dans lequel il est prévu un circuit (38, 39) de détection de mise sous tension des moyens détecteurs (36), en parallèle sur les moyens interrupteurs (34).

## Patentansprüche

1. Verfahren zur Konfiguration eines Datenübertragungsnetzes (8), das eine Gruppe von universellen Endgeräten (4) und einen Verbindungsbus (3) umfaßt, wobei die Verbindung die Übertragung (15, 17) einer Identifizierungsanfrage an das Netz (8) sowie die Speicherung (16) dieser Identifizierung steuert, wobei das Verfahren **dadurch gekennzeichnet ist, daß** jedes Endgerät (4) die Verbindung dadurch erfaßt (13, 14), daß es mit dem Bus (39) verbunden wird.

2. Verfahren nach Anspruch 1, **dadurch gekennzeichnet, daß** jedes Endgerät, wenn es von dem Bus (3) getrennt wird, seine Identifizierung (16), die gespeichert ist, löscht.

3. Verfahren nach einem der Ansprüche 1 oder 2, **dadurch gekennzeichnet, daß**, wenn der Bus (3) polarisiert ist, der Zustand der Verbindung durch Erfassung der Polarisierung des Busses (3) erfaßt ist.

4. Verfahren nach Anspruch 3, **dadurch gekennzeichnet, daß** man die Polarisierung des Busses (3) durch zyklische Stichproben erfaßt.

5. Verfahren nach Anspruch 4, **dadurch gekennzeichnet, daß** man, im Ruhezustand, jedes Endgerät (4) im Bereitschaftszustand hält, auf statische Art und Weise sein In-Verbindung-Bringen mit dem Bus (3) erfaßt und dann das Endgerät (4) für die zyklische Stichprobennahme in Bereitschaftszustand versetzt.

6. Verfahren nach einem der Ansprüche 1 bis 5, **dadurch gekennzeichnet, daß** eine Verzögerung (20) nach der Erfassung der Verbindung geschaltet wird und man einen Alarm (22) auslöst, wenn die Verzögerung (20) nicht durch den Empfang einer Antwort betreffend die Zuteilung einer Identifikation unterbrochen wird.

7. Endgerät für die Umsetzung des Verfahrens nach Anspruch 1, **dadurch gekennzeichnet, daß** Mittel (13, 14) zur Erfassung des Verbindungszustands des Endgeräts mit einem Bus (3) eines Datenübertragungsnetzes (8) vorgesehen sind, die dafür eingerichtet sind, um Mittel zur Abfrage (17), durch den Bus (3), und zur Speicherung (16) einer Identifikation des Netzes (8) zu steuern.

8. Endgerät nach Anspruch 7, **dadurch gekennzeichnet, daß** die Mittel zur Überwachung (13, 14) dazu eingerichtet sind, um die Löschung der gespeicherten Identifikation (16) im Falle der Trennung von dem Bus (3) anzusteuern.

9. Endgerät nach einem der Ansprüche 7 oder 8, **dadurch gekennzeichnet, daß** die Mittel zur Überwachung eine Schalteinrichtung (34) umfassen, die durch eine Sequenzereinrichtung (10, 12) angesteuert wird und so eingerichtet ist, daß sie zyklisch eine Einrichtung (36) zur Erfassung einer Polarisationsspannung des Busses (3) aktiviert.

10. Endgerät nach Anspruch 8, **dadurch gekennzeichnet, daß** eine Schaltung (38, 39) zur Erfassung des Unter-Spannung-Setzens der Erfassungseinrichtung (36) vorgesehen ist, parallel zu der Schalteinrichtung (34).

## Claims

1. A process for configuration of a data transmission network (8) which has a set of standardized terminals (4) and a connecting bus (3), the connection controlling the sending (15, 17) of an identifier request to the network (8) and the memorizing (16) of this identifier, the process being **characterised by** the fact that by connecting it to the bus (3), each terminal (4) detects (13, 14) the connection.

2. A process according to Claim 1 whereby each terminal, by disconnecting it from the bus (3), deletes its memorized identifier (16).

3. A process according to one of the Claims 1 and 2 whereby, the bus (3) being polarized, the state of connection is detected through detection of the polarization of the bus (3).

4. A process according to Claim 3 whereby polarization of the bus (3) is detected by cyclic sampling.

5. A process according to Claim 4 whereby, at rest, each terminal (4) is kept in the waiting state, its connection with the bus (3) is detected statically, and the terminal (4) is then woken up for the cyclic sampling.

6. A process according to one of the Claims 1 to 5 whereby a timing device (20) is armed after detection of the connection and an alarm (22) is given if the timer (20) is not interrupted by an identifier allocation response being received.

7. A terminal for carrying out the process in Claim 1, whereby means (13, 14) are provided for detecting the state of connection of the terminal to a bus (3) of a data transmission network (8), arranged for controlling means of request (17), through the bus (3), and of memorizing (16) an identifier of the network (8).

8. A terminal according to Claim 7, whereby the monitoring means (13, 14) are arranged to control the deletion of the memorized identifier (16) in the case of the bus (3) being disconnected.

9. A terminal according to one of the Claims 7 and 8 whereby the monitoring means contain interrupting means (34) controlled by sequencing means (10, 12) and arranged to activate cyclically means (36) of detecting a polarization voltage of the bus (3).

10. A terminal according to Claim 8 whereby a circuit (38, 39) is provided for detecting the switching on of the detecting means (36), in parallel on the interrupting means (34).
